# EUROPEAN PATENT SPECIFICATION

(11) **EP 1 600 288 B1**
(45) Date of publication and mention of the grant of the patent: **08.06.2011**
(21) Application number: 05004598.8
(22) Date of filing: 03.03.2005
(51) Int. Cl.: B32B 5/28, B32B 17/04, B32B 27/04, B32B 29/02

(54) **Fiber-reinforced decorative laminate**
Faserverstärkter dekorativer Schichtstoff
Stratifié dekorativ renforcé de fibres

(30) Priority: 28.05.2004 US 857202
(43) Date of publication of application: 30.11.2005
(73) Proprietor: Panolam Industries International, Inc, Shelton, CT 06484 (US)
(72) Inventor: Karam, Fouad Torkum, Hamden Connecticut 06518 (US); Gauthier, Sylvie, Shelton Connecticut 06484 (US)
(74) Representative: Göhring, Robert

(56) References cited:
- EP-A- 0 249 583
- EP-A- 0 899 092
- EP-A- 0 956 933
- DE-A1- 2 552 688
- US-A- 4 473 613
- US-A- 4 871 596

## Description

### BACKGROUND OF THE INVENTION

### Field of the Invention

The present invention relates to decorative laminates in general and, more particularly, to decorative laminates having a fiber-reinforced layer. In addition, the present invention relates to a method for manufacturing the same.

### Background Information

High pressure decorative laminates are often used in the construction of kitchen and bath cabinetry, furniture, store fixtures and other building products. Heat and pressure consolidated decorative laminates are generally produced utilizing a core material comprising a plurality of phenolic resin impregnated kraft paper sheets, a face sheet impregnated with a melamine-formaldehyde resin and optionally a melamine resin impregnated overlay sheet. These high pressure laminates, examples of which are described in U.S. Patent No. 3,418,189 to Grosheim et al., U.S. Patent No. 4,311,748 to Casey et al., and U.S. Patent No. 4,473,613 to Jaisle et al., have found world-wide acceptance as construction materials, i.e., wall panels, countertops, etc. in the home and office. They can be prepared so as to function in a variety of service applications and can be produced with surfaces such as high gloss, a matte finish or an embossed finish. There is considerable consumer demand for decorative laminates in a variety of colors, patterns, and textures. Furthermore, high pressure decorative laminates capable of withstanding high abuse in applications such as high-traffic corridor areas of stores, restaurants, hotels, schools and hospitals are also highly desirable. The publication EP 0 899 092 A1 describes a flame retardant or incombustible decorative laminated sheet which is a one-piece laminate of the following materials: one or more layers of a sheet material for a core layer, obtained by impregnating a base sheet material made of an inorganic fiber, with a composition comprising a phenolic resin and/or a melamine resin and aluminum hydroxide and/or magnesium hydroxide, the proportions of the former and the latter in the composition being 4-15% by weight and 96-85% by weight, respectively, and a sheet material for a decorative layer, placed on at least one side of the sheet material for the core layer.; in the case the sheet material for the core layer consists of two or more layers, there can be interposed, between the layers of the sheet material for the core layer, a sheet material for a reinforcing layer obtained by impregnating a base sheet material made of an inorganic fiber, with a thermosetting resin. The publication EP 0 956 933 A1 relates to a ligneous finishing material which comprises a base plate; a sheet formed from a sheet base impregnated with a thermosetting; and a decorative sheet impregnable with a resin; these layer components being laminated on each other by hot-press process; the thermosetting resin being a phenol resin of which the fluidity in a pre-pregnated status is 2 to 50 %. The ligneous finishing material is inexpensive and highly resistant to surface damaging, and usable widely as a surface facing material for floor, etc. and as a facing material for fitting and furnishings. Finally, publication DE 25 52 688 describes a method for manufacturing fiber-reinforced laminates. Such method includes a fiber-reinforced base ply of a thermosetting synthetic resin and an outer ply of an absorbent material

Decorative laminates are usually laminated or glued in a separate operation to a structural base or substrate. Typically, the structural base has been formed from plywood, particleboard, chipboard, hardboard, wood waste, medium- or high-density fiberboard. Although not as common, it is also known to form the structural base from recycled plastic, ABS/PC, nylon, and/or PVC.

U.S. Patent No. 4,871,596 to Kamiya et al. discloses an artificial marble laminate formed from a plurality of porous cellulosic sheets impregnated with a melamine resin. Each of these resin-impregnated cellulosic sheets, although mostly composed by weight of either alpha-cellulose or linter fiber, may include a limited amount of non-cellulose fiber, such as glass, carbon, polyester, or nylon fiber. Kamiya discloses a two-step process for forming the finished laminated panel. In the first step, the resin-impregnated cellulosic sheets may be cured with a decorative layer to form a decorative laminate. In the second step, the decorative laminate is bonded to the structural base material such as plywood.

Composite structural panels formed from woven, non-woven or chopped fibers bound together with a thermosetting or a thermoplastic resin have been available for some time. Typical high-modulus or high-strength fibers include, among others, glass, graphite, Kevlar TM or aramid, boron, polyethylene, polyimide, or silicon carbide.

Generally, composite fiber-reinforced panels are formed from multiple layers or plies of the resin-impregnated fiber-reinforced sheets. The individual layers of a multi-layer composite fiber-reinforced panel need not be identical, but can vary in the style, fiber material, thickness, and orientation of the fiber-reinforcing sheets and in the specific resin material used, additives to the resin, and amount of impregnation.

Presently available composite fiber-reinforced panels lack desirable decorative qualities such as color or patterns.

### SUMMARY OF THE INVENTION

According to the present invention, a method for the produetion of a fiber-reinforced decorative laminate is provided. The method includes stacking, in a superimposed relationship, a decorative first layer and a fiber-reinforced second layer. The first layer, which includes a decorative sheet, is partially resin-impregnated and partially cured. The second layer includes at least one fiber-reinforced sheet, which is substantially devoid of cellulose. The method further includes simultaneously curing, under heat and pressure, the first and second layers to create the fiber-reinforced decorative laminate.

Also according to the present invention, a heat and pressure consolidated laminate is provided that comprises in superimposed relationship a decorative layer consisting of one or more cellulosic pigmented sheets impregnated with a transparent thermosetting resin, a core layer containing at least one fiber-reinforced sheet, which is substantially devoid of cellulose and is impregnated with a thermosetting resin, and an optional backer layer, which includes one or more cellulosic sheets impregnated with a thermosetting resin. The decorative layer, core layer, and the optional backer layer being consolidated by heat and pressure to provide a fiber-reinforced decorative laminate ("fiber-reinforced decorative laminate") having desirable flexural strength, impact resistance as well as having desirable resistance to water absorption, fire, chipping, and being easily fabricated.

In one embodiment, the fiber-reinforced decorative laminate may further include stacking, in a superimposed relationship to the decorative layer and the core layer, a decorative second layer that replaces the optional backer layer, consisting of one or more cellulosic pigmented sheets impregnated with a transparent thermosetting resin. The decorative layer, core layer, and the decorative second layer being consolidated by heat and pressure to provide a fiber-reinforced decorative laminate having desirable flexural strength and impact resistance, as well as having desirable resistance to water absorption, fire, chipping, and being easily fabricated.

In another embodiment, the decorative layer of the inventive fiber-reinforced decorative laminate may include one or more cellulosic sheets, wherein at least one of said cellulosic sheets is pigmented throughout or has a design printed on its surface. The decorative layer may also include one or more overlay sheets, a top coating that may or may not contain abrasive particles. It includes one or more barrier sheets. The fiber-reinforced sheets of the core layer may include one or more sheets made of woven glass fibers, non-woven glass fibers, and/or chopped glass fibers. Further, the fiber-reinforced sheets may include glass fibers, graphite fibers, aramid fibers, boron fibers, high-modulus fibers, and/or a combination of fibers thereof.

An advantage of the present invention is that it may provide an impact-resistant fiber-reinforced decorative laminate. A further advantage of the present invention is that it may provide a lightweight decorative laminate with desirable flexural strength for use in situations where the laminate may be subject to impact loads. Another advantage of the present invention is that the presence of a decorative layer may not adversely affect the flammability of the fiber-reinforced laminate. In addition, the flammability properties of the fiber-reinforced decorative laminate may be superior to that of a conventional high pressure decorative laminate. Another advantage of the present invention is that the complete fiber-reinforced decorative laminate may be formed in a single curing operation.

These and other features and advantages of the present invention will become apparent in light of the drawings and detailed description of the present invention provided below.

### DESCRIPTION OF THE DRAWINGS

FIG. 1 is a cross sectional view (not to scale) of the superimposed constituent layers according to the first embodiment of the present invention; and

FIG. 2 is a cross sectional view (not to scale) of the superimposed constituent layers according to another embodiment of the present invention.

FIG. 3 is a cross sectional view (not to scale) of the superimposed constituent layers according to another embodiment of the present invention.

FIG. 4 is a cross sectional view (not to scale) of the superimposed constituent layers according to another embodiment of the present invention.

### DETAILED DESCRIPTION OF THE INVENTION

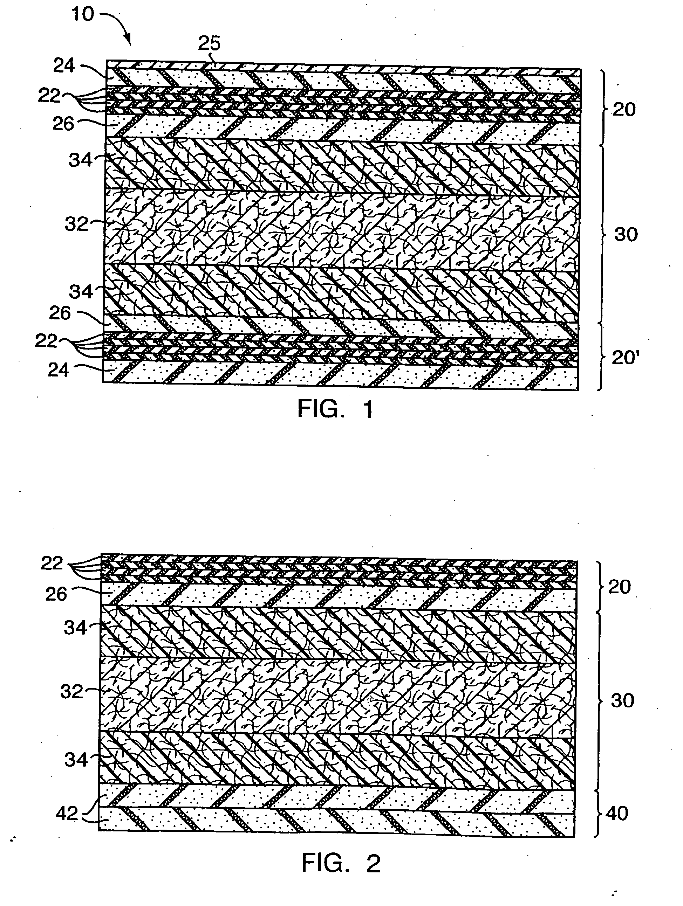

Now referring to FIGS. 1 and 2, the decorative laminated structure of the present invention is generally represented by reference numeral 10. Decorative laminated structure 10 includes a decorative layer 20, a fiber-reinforced layer 30 and an optional backer layer 40 or decorative layer 20'. Decorative layer 20 is superimposed onto fiber-reinforced layer 30. Backer layer 40 or decorative layer 20' may be superimposed onto fiber-reinforced layer 30, on the opposite side of first decorative layer 20.

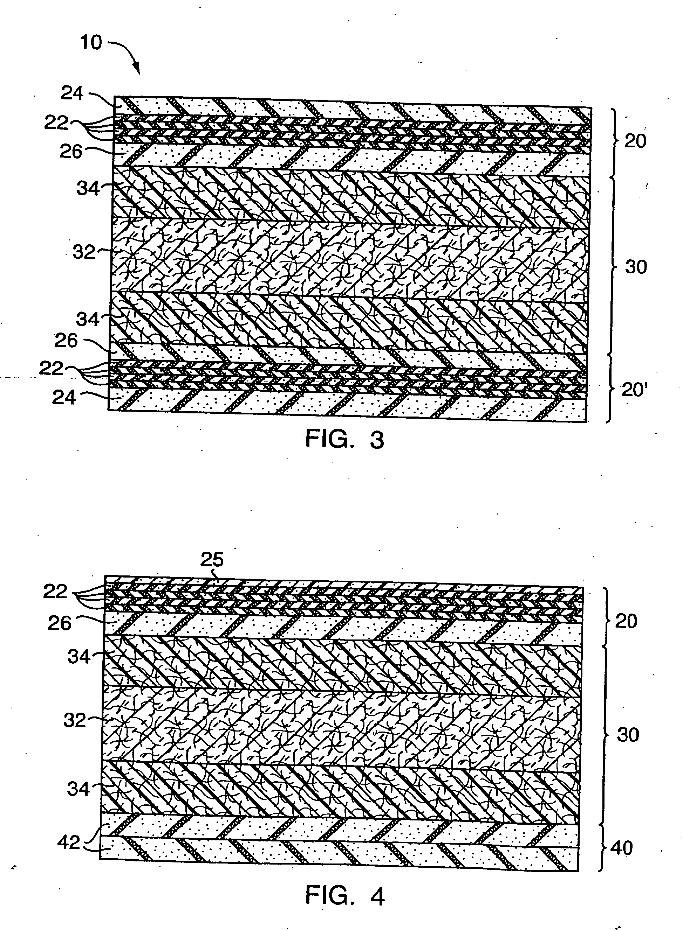

Decorative layer 20 includes one or more sheets. In its simplest configuration, decorative layer 20 includes one or more decorative sheets 22. Decorative layer 20 may further include one or more overlay sheets 24. It includes one or more barrier sheets 26 (e.g., see FIGS. 1 and 3). Decorative layer 20 may be impregnated, fully or partially, with a thermosetting resin.

As used herein, the term "sheet" generally means a thin, distinct ply. A sheet may be planar, but a sheet may also be capable of assuming a non-planar configuration, for example, sheets that conform to three-dimensional structures. A decorative sheet 22 includes at least one cellulosic sheet. A cellulosic sheet includes any thin layer formed substantially of plant fibers or processed plant fibers, for example, paper, alpha-cellulose, or linter products. Alternatively, decorative sheet 22 may be formed from fabrics, polymeric sheets, such as a polyester non-woven, and any other continuous, discontinuous or particulate material, or combination of materials, capable of imparting a color or design to the finished laminate. Decorative sheets 22 may be pigmented throughout, may have a design woven into their structure, or may have a design printed on their surface. Optionally, a top coating 25 may be applied to decorative sheets 22 (FIG. 4) or it may be applied to overlay 24 (FIG. 1). The top coat 25 may include abrasive particles. Decorative layer 20 may be impregnated, fully or partially, with a resin. Typically, the resin is a thermosetting resin.

Referring to FIGS. 1 and 3, overlay layer 24 may include one or more cellulosic sheets, in particular, overlay layer 24 may include alpha-cellulosic sheets. Overlay layer 24 may further include abrasive particles, as known in the art, to impart increased abrasion resistance to the layer. Overlay layer 24 may be impregnated, fully or partially, with a resin, For example, overlay layer 24 may be formed of high-quality alpha-cellulose paper impregnated with a thermosetting resin. Typically, the alpha-cellulose paper acts as a translucent carrier for the resin, imparts strength to the resin, facilitates maintaining a uniform resin thickness, and provides a measure of abrasion resistance to the decorative layer 20.

Barrier sheets 26 include cellulosic sheets, which are not impregnated with a resin.

Fiber-reinforced layer 30 includes at least one fiber-reinforced sheet, which is substantially devoid of cellulose: The use of the phrase "devoid of cellulose" means that the sheet contains no plant fiber or processed plant fiber product. The use of the phrase "substantially devoid of cellulose" means that the sheet may have some minor amount of plant fiber product, but the majority of the sheet, by weight, is composed of non-plant fiber materials. For example, layer 30 may include multiple sheets or plies that are reinforced only with glass, carbon, aramid, boron, and other known synthetic reinforcing fibers. The reinforcing fiber sheets may be supplied as woven or non-woven sheets, and as continuous or discontinuous fibers, as are generally known in the art. For example, as shown in FIG. 1, a chopped glass fiber sheet 32 may be sandwiched between two woven aramid (Kevlar^{®}) fiber sheets 34.

Fiber-reinforced layer 30 may also include nonfiber-reinforced sheets, for example, a sheet of solid or foamed polymeric material or a sheet of resin filled with particulate matter. These nonfiber-reinforced sheets may be interspersed within the fiber-reinforced layer. Alternatively, it is within the scope of the present invention, for fiber-reinforced layer 30 to contain cellulose sheets in addition to at least one fiber-reinforced sheet, which is substantially devoid of cellulose. Further, it is also within the scope of the present invention, for layer 30 to include one or more fiber-reinforced cellulosic sheets in addition to the at least one fiber-reinforced sheet, which is substantially devoid of cellulose.

Fiber-reinforced layer 3 0 may be impregnated with a thermosetting or a thermoplastic resin, as is also known in the art. Impregnation may be full or partial, and the resin is partially cured.

Decorative laminated structure 10 may include a backer layer 40. Backer layer 40, as best shown in FIG. 2, lays adjacent fiber-reinforced layer 30 on the side opposite decorative layer 20. Backer layer 40 may be formed of one or more sheets 42, which may or may not be coated or impregnated, with a resin. The sheet typically includes a cellulosic material. In one embodiment of the present invention, backer layer 40 may be coated or impregnated with a thermosetting resin and partially cured. Example backer products include fire retardant kraft paper, or décor paper impregnated with thermosetting resins. During curing of decorative laminated structure 10, backer layer 40 is thennofused to fiber-reinforced layer 30.

Also optionally, rather than including backer layer 40, decorative laminate structure 10 may include a second decorative layer 20', as best shown in FIG 1. This second decorative layer 20' would be superimposed with fiber-reinforced layer 30 on the side opposite the first decorative layer 20. Typically, the second decorative layer 20' would be the mirror image (possibly with the exception of the specific design incorporated into decorative sheet) of the first decorative layer 20. However, the second decorative layer need not contain the identical sheets as in the build up of the first decorative layer.

In the partially cured state, the sheets of the decorative layer, the sheets of the fiber-reinforced layer and the sheets of the backer/decorative layer may be drapable. The term drapable, as used herein to describe the various sheets of the present invention, is intended to mean that the materials are substantially flaccid, and have the ability to conform to two- or three-dimensional features in a substantially uniform fashion. In the cured state, the decorative laminate structure may be quasi-flexible or essentially rigid. The term quasi-flexible, as used herein, means that the stiffness characteristics of the structure come into play and that only a limited amount of flexing without incurring permanent damage is possible. With an essentially rigid decorative laminated structure, the stiffness characteristics of the structure as a whole dominate, although individual plies or groups or plies may remain flexible or quasi-flexible. In addition, the flexibility of the structure can be modified to suit a particular application by altering or changing the resins and/or the thickness of the structure.

In a preferred embodiment, the decorative laminated structure is impact-resistant. As used herein, the term "impact-resistant" means the ability to withstand relatively low-energy and/or low-speed blunt objects impinging or striking the surface of the structure with no, or only minor, damage. In general, an impact-resistant structure may resist the formation of cracks radiating from the point of impact and the delamination of plies beneath the point of impact.

Prior to curing, the sheets of the decorative layer, the fiber-reinforced layer or the backer/decorative layer may be processed to improve their handleability. This may include, for example, partially drying a sheet to remove some of the more volatile elements from the resin, thereby reducing the stickiness of the sheet.

Thermosetting resins, thermoplastic resins, and their various additives are well known in the art and are commercially available. The properties of specific resins will not be described in further detail other than to say that specific parameters of the resin may be chosen to best accommodate the application at hand. For instance, certain resins and additives might be selected based on their ability to provide impact-resistance and bonding strength depending upon the fiber-reinforcements, fire-resistance, overall panel flexibility, resistance to degradation due to heat, moisture, or radiation cycles, etc.

A first process of manufacturing the present fiber-reinforced decorative laminate 10 involves stacking the decorative layer 20, the fiber-reinforced layer 30 and, optionally, the backer/decorative layer 40 in a superimposed relationship (i.e., a "build-up") between caul plates. The build-up is then subjected to a predetermined pressure and temperature for a time sufficient to consolidate the respective layers.

A second process for manufacturing the present fiber-reinforced decorative laminate 10 involves continuously, or semi-continuously, supplying to a continuous press the decorative layer 20, the fiber-reinforced layer 30 and, optionally, the backer/decorative layer 40, in the aforesaid superimposed relationship, from sources upstream of the continuous press. The continuous press is set up to create the temperature and pressure environment required to thermally fuse the layers into the finished laminated product. The line speed of the continuous press is chosen to create a dwell time within the press that is adequate to ensure sufficient bonding of the various layers. A release sheet may be disposed on each side of the build-up prior to entering the press. The release sheets are typically drawn off after the laminate exits the press. The continuous press may be advantageous because it decreases the processing time of the laminate, although use of the continuous press requires that the sheets fed into the press be continuous (or semi-continuous) and have a certain measure of handleability.

In both of the above-described manufacturing processes, the elevated temperature and pressure is meant to cause the resins within the sheets to flow between the sheets, such that upon cooling, the sheets have been consolidated and an integral panel formed. In the discontinuous curing process, the present invention would generally be processed at a temperature in the range from 110°C to 170°C, and at a pressure within the range of 3.45 x 10⁶ Pa (500 psi) to 1.03 x 10⁶ Pa (1600 psi). In the continuous curing process, the present invention would generally be processed at a temperature above about 120°C, with the temperature range depending on the dwelling time of the laminate in the press, and at a pressure within the range of 2.07 x 10⁶ Pa (300 psi) to 6.89 x 10⁶ Pa (1000 psi). Curing temperatures and pressures are typically selected based on the specific resin in use and the ultimate desired properties of the cured laminate. Curing temperatures can also be manipulated to suit the speed of the process; e.g., higher curing temperatures can be used at higher processing speeds and lower curing temperatures can be used at tower processing speeds.

In a preferred embodiment, the cured decorative laminated structure 10, described above, is designed to be subsequently attached to another structure. For example, decorative laminate structure 10 could be adhesively or mechanically fastened to cargo-carrying products or to walls in high-traffic corridors to provide protection from impact or other damage. As another example, laminated structure 10 could be permanently or removably attached to a finished piece of furniture in an after-market situation.

The following examples are illustrative of the inventive decorative laminate and do not constitute any limitation with regard to the subject matter of the invention:

### EXAMPLE I:

A decorative laminated structure 10 is manufactured using a noncontinuous press. A build-up consisting of a release sheet, a decorative layer 20, a fiber-reinforced layer 30, and a backer layer 40 is made in a superimposed relationship and placed between steel caul plates. The decorative layer 20 includes a solid color decor paper treated with melamine resin and an untreated barrier sheet. The fiber-reinforced layer 30 includes eight plies of glass cloth impregnated with melamine resin. Each glass cloth ply is formed of woven glass fabric, style 7628, with finish 516. The backer layer is regular 29,48 kg (65-lbs). HP balancing paper. The build-up is then subjected to a pressure of about 4,82×10⁶Pa (700 psi). Once the predetermined pressure is reached, the press is heated to a predetermined temperature of about 140°C. The press is held at the predetermined pressure and temperature for a heating cycle of about 5 minutes. The pressed laminate is then cooled in the press under pressure to under about 60°C. The pressure is then released and the fiber-reinforced decorative laminate is removed from the press. The resulting laminate is approximately 1,5×10⁻³m (0.060 inches) thick.

Alternatively, the decorative layer 20 may include a printed décor paper treated with melamine resin and an overlay, also treated with melamine resin. Also alternatively, the fiber-reinforced layer 30 could be formed of twelve plies of glass cloth, in which case the resulting laminate would be approximately 2,25×10⁻³m(0.090 inches) thick. Optionally, more or fewer glass cloth plies or different types of glass cloth plies could be used to provide almost any thickness of pressed laminate. In even other alternatives, the backer layer may be selected from fire retardant kraft paper or kraft 53,52 kg(118 lb); paper treated with a fast cure phenolic resin.

### EXAMPLE II:

The fiber-reinforced decorative laminate 10 is manufactured using a GreCon continuous high pressure laminating press, which includes an inlet section, a heating section and a cooling section. The temperature of each section is controlled independently. The total amount of heat imparted to the layers of the build-up is controlled by the temperature of the different sections and the dwell time, which is dependent on the line speed. This continuous process requires that the various sheets used to manufacture the laminate be fed into the press as continuous webs. A roll of décor paper treated with melamine resin, a roll of untreated barrier paper, multiple rolls of then glass cloth, as described in Example I above, and a roll of backer paper are situated upstream of the continuous press in a manner enabling them to continuously enter the press in the aforesaid superimposed relationship. The temperature settings of the different press sections are as follows: the inlet section is set at approximately 200°C, the heating section is set at approximately 186°C, and the cooling section is set at approximately 181°C. The pressure is set at about 2.41 x 10⁶ Pa (350 psi). The line speed of the continuous press is set at about aft/min to create a dwell time within the press of approximately 2.4 minutes.

## Claims

1. A method for the production of a fiber-reinforced decorative laminate comprising:
stacking in a superimposed relationship
- a decorative layer being partially resin impregnated and partially cured, said decorative layer includes one or more cellulosic sheets as decorative sheets and at least one cellulosic sheet as barrier sheet, said one or more decorative sheets being impregnated with a thermosetting resin and said at least one barrier sheet being not impregnated with resin, and
- a fiber-reinforced core layer, which includes at least one fiber-reinforced sheet, which is substantially devoid of cellulose, said core layer being at least partially resin-impregnated and partially cured, and said at least one barrier sheet adjoining the core layer;
simultaneously curing, under heat and pressure, said decorative and core layers to create said fiber-reinforced decorative laminate.

2. The method of claim 1, further including:
stacking, in a superimposed relationship to said decorative and core layers, a decorative third layer, which includes one or more decorative sheets, said third layer being at least partially resin-impregnated and at least partially cured; and
simultaneously curing said third layer with said decorative and core layers.

3. The method of claim 1, further including:
stacking, in a superimposed relationship to said decorative and core layers, a backer layer; and thermofusing said backer layer to said core layer simultaneously with said curing step.

4. The method of claim 1, further including:
impregnating said core layer, at least partially, with a thermosetting resin.

5. The method of claim 1, wherein the step of curing includes:
inserting said stacked layers between plates of a thermosetting press; applying a predetermined pressure to said stacked layers within the thermosetting press; applying a predetermined temperature to said stacked layers within the thermosetting press; and
maintaining said stacked layers in the heated, pressurized thermosetting press for a period of time sufficient to form a laminated structure from said layers.

6. The method of claim 5, wherein said predetermined temperature ranges from 110° C to 170° C and said predetermined pressure ranges from 3.45 MPa (500 psi) to 11.03 MPa (1600 psi).

7. The method of claim 1, wherein the step of curing includes:
setting a temperature of a continuous thermosetting press to a predetermined temperature;
setting a pressure of said continuous thermosetting press to a predetermined pressure;
feeding said decorative layer and said core layer into said continuous thermosetting press, said layers being fed into said press from a location upstream from said press; and
maintaining said superimposed layers in said heated, pressurized continuous thermosetting press for a period of time sufficient to form a laminated structure from said layers.

8. The method of claim 7, wherein said predetermined temperature is above about 120° C and said predetermined pressure ranges from 2.07 MPa (300 psi) to 6.89 MPa (1000 psi).

9. The method of claim 7, wherein at least one of said decorative layer and said core layer include multiple sheets and said multiple sheets are fed into said continuous thermosetting press from continuous webs located upstream from said press.

10. A fiber-reinforced decorative laminate, comprising:
a decorative layer including one or more cellulosic sheets as decorative sheets impregnated with a thermosetting resin and partially cured; and
a core layer including a plurality of non-cellulosic, fiber-reinforced sheets impregnated, at least partially, with a thermosetting resin and partially cured,
**characterized in that** said decorative layer further includes at least one cellulosic sheet as barrier sheet, that adjoins the core layer, the at least one barrier layer being not impregnated with resin.

11. The laminate of claim 10, wherein said decorative layer includes one or more decorative sheets, of which at least one is pigmented throughout.

12. The laminate of claim 10, wherein said decorative layer includes one or more decorative sheets, of which at least one has a design printed on its surface.

13. The laminate of claim 10, wherein said decorative layer further includes an overlay layer, said overlay layer including one or more alpha-cellulose sheets.

14. The laminate of claim 10, wherein said decorative layer further includes a top coating containing abrasive particles.

15. The laminate of claim 10, wherein said core layer includes at least one of a sheet of woven glass fiber material, a sheet of non-woven glass fiber material, a sheet of chopped glass fiber material, or a combination thereof.

16. The laminate of claim 10, wherein said core layer includes at least one of a glass fiber, a graphite fiber, an aramid fiber, a boron fiber, or a high-modulus fiber material.

## Patentansprüche

1. Verfahren zur Herstellung eines faserverstärkten, dekorativen Laminats, umfassend:
das Stapeln in einer übereinander gelagerten Beziehung
- einer dekorativen Schicht, welche teilweise harzimprägniert ist und teilweise ausgehärtet ist, wobei die dekorative Schicht eine oder mehrere zellulosehaltige Lagen als dekorative Lagen und mindestens eine zellulosehaltige Lage als Sperrlage enthält, wobei die eine oder die mehreren dekorativen Lagen mit einem wärmehärtenden Harz imprägniert sind und wobei die mindestens eine Sperrlage nicht mit Harz imprägniert ist, und
- einer faserverstärkten Kern-Schicht, welche mindestens eine faserverstärkte Lage beinhaltet, welche im Wesentlichen zellulosefrei ist, wobei die Kern-Schicht zumindest teilweise harzimprägniert und teilweise ausgehärtet ist, und wobei die mindestens eine Sperrlage zur Kern-Schicht benachbart ist;
das gleichzeitige Aushärten der dekorativen und der Kern-Schicht(en) unter Wärme und Druck, um das faserverstärkte dekorative Laminat herzustellen.

2. Verfahren nach Anspruch 1, ferner aufweisend:
Stapeln, in einer übereinander gelagerten Beziehung zu den dekorativen und den Kern-Schichten, einer dekorativen dritten Schicht, welche eine oder mehrere dekorative Lagen aufweist, wobei die dritte Schicht zumindest teilweise harzimprägniert und zumindest teilweise ausgehärtet ist; und
gleichzeitiges Aushärten der dritten Schicht mit den dekorativen und den Kern-Schichten.

3. Verfahren nach Anspruch 1, ferner aufweisend:
Stapeln, in einer übereinander gelagerten Beziehung zu den dekorativen und den Kern-Schichten, einer Hinterschicht; und
Wärmeverschmelzen der Hinterschicht an die Kern-Schicht gleichzeitig mit dem Aushärteschritt.

4. Verfahren nach Anspruch 1, ferner aufweisend:
Imprägnieren der Kern-Schicht, zumindest teilweise, mit einem wärmehärtenden Harz.

5. Verfahren nach Anspruch 1, wobei der Aushärteschritt aufweist:
Einfügen der gestapelten Schichten zwischen Platten einer wärmehärtenden Presse; Aufbringen eines vorbestimmten Drucks auf die gestapelten Schichten innerhalb der wärmehärtenden Presse; Beaufschlagen der gestapelten Schichten mit einer vorbestimmten Temperatur innerhalb der wärmehärtenden Presse; und
Halten der gestapelten Schichten in der erwärmten, druckbeaufschlagten wärmehärtenden Presse für eine Zeitdauer, welche ausreicht, um eine LaminatStruktur aus den Schichten zu bilden.

6. Verfahren nach Anspruch 5, wobei die vorbestimmte Temperatur im Bereich von 110° C bis 170° C liegt und der vorbestimmte Druck im Bereich von 3.45 MPa (500 psi) bis 11.03 MPa (1600 psi) liegt.

7. Verfahren nach Anspruch 1, wobei der Aushärteschritt aufweist:
Einstellen einer Temperatur einer wärmehärtenden Durchlauf-Presse auf eine vorbestimmte Temperatur;
Einstellen eines Drucks der wärmehärtenden Durchlauf-Presse auf einen vorbestimmten Druck;
Zuführen der dekorativen Schicht und der Kern-Schicht in die wärmehärtende Durchlauf-Presse, wobei die Schichten von einer Position stromaufwärts der Presse in die Presse zugeführt werden, und
Halten der übereinander gelagerten Schichten in der erwärmten, druckbeaufschlagten wärmehärtenden Durchlauf-Presse für eine Zeitdauer, die ausreicht, um eine Laminatstruktur aus den Schichten zu bilden.

8. Verfahren nach Anspruch 7, wobei die vorbestimmte Temperatur 120° C übersteigt und der vorbestimmte Druck im Bereich von 2.07 MPa (300 psi) bis 6.89 MPa (1000 psi) liegt.

9. Verfahren nach Anspruch 7, wobei mindestens eine der dekorativen Schicht und der Kern-Schicht mehrere Lagen beinhaltet und wobei die mehreren Lagen in die wärmehärtende Durchlauf-Presse von Endlosbahnen, die stromaufwärts der Presse angeordnet sind, zugeführt werden.

10. Faserverstärktes, dekoratives Laminat, aufweisend:
eine dekorative Schicht, welche eine oder mehrere zellulosehaltige Lagen, als dekorative Lagen beinhaltet, die mit einem wärmehärtenden Harz imprägniert und teilweise ausgehärtet sind; und
eine Kern-Schicht, die eine Vielzahl von nicht-zellulosehaltigen, faserverstärkten Lagen aufweist, welche zumindest teilweise mit einem wärmehärtenden Harz imprägniert und teilweise ausgehärtet sind,
**dadurch gekennzeichnet, dass** die dekorative Schicht weiterhin mindestens eine zellulosehaltige Lage als Sperrlage beinhaltet, welche zur Kern-Schicht benachbart ist, wobei die zumindest eine Sperrschicht nicht mit Harz imprägniert ist.

11. Laminat nach Anspruch 10, wobei die dekorative Schicht eine oder mehrere dekorative Lagen enthält, von welchen zumindest eine durchgängig pigmentiert ist.

12. Laminat nach Anspruch 10, wobei die dekorative Schicht eine oder mehrere dekorative Lagen beinhaltet, von denen mindestens eine ein Design auf ihre Oberfläche gedruckt hat.

13. Laminat nach Anspruch 10, wobei die dekorative Schicht ferner eine Deckschicht aufweist, wobei die Deckschicht eine oder mehrere Alpha-Zellulose-Lagen beinhaltet.

14. Laminat nach Anspruch 10, wobei die dekorative Schicht ferner eine obere Beschichtung aufweist, welche abrasive Partikel beinhaltet.

15. Laminat nach Anspruch 10, wobei die Kern-Schicht mindestens eines aus einer gewebten Glasfaser-Material-Lage, einer nicht-gewebten Glasfaser-Material-Lage, aus einer Kurzglasfaser-Material-Lage, oder einer Kombination daraus, aufweist.

16. Laminat nach Anspruch 10, wobei die Kern-Schicht mindestens eines aus einem Glasfaser-, einem Graphitfaser-, einem Aramidfaser-, einem Borfaser- oder einem Hochmodul-Fasermaterial beinhaltet.

## Revendications

1. Procédé de production d'un stratifié décoratif renforcé par des fibres comprenant les étapes suivantes :
- empilage suivant une relation superposée,
* une couche décorative partiellement imprégnée de résine et partiellement durcie, cette couche décorative étant composée d'une ou plusieurs feuilles cellulosiques comme feuilles décoratives et au moins une feuille cellulosique est une feuille barrière, la ou les feuilles décoratives étant imprégnées d'une résine thermodurcissable et au moins une feuille formant barrière n'est pas imprégnée avec de la résine, et
* une couche de coeur renforcée par des fibres comporte au moins une feuille renforcée par des fibres qui ne contient pratiquement pas de cellulose, la couche de coeur étant au moins partiellement imprégnée de résine et partiellement durcie et au moins cette feuille barrière est adjacente à la couche du coeur,
- on fait durcir simultanément, sous pression et chaleur, la couche décorative et la couche de noyau pour créer le stratifié décoratif renforcé par des fibres.

2. Procédé selon la revendication 1,
**caractérisé en ce qu'**
il comprend les étapes suivantes :
- empilage de façon superposée des couches décoratives et des couches de coeur, une troisième couche décorative ayant une ou plusieurs feuilles décoratives, cette troisième couche décorative étant au moins en partie imprégnée de résine et au moins en partie durcie, et
- le durcissage simultané se fait avec la troisième couche, les couches décoratives et les couches de coeur.

3. Procédé selon la revendication 1,
**caractérisé en ce qu'**
il comprend en outre l'étape suivante :
- empilage de manière superposée des couches décoratives et des couches de coeur, une couche d'appui, et
- on produit la thermofusion de couche d'appui sur la couche de coeur, simultanément avec l'étape de durcissement.

4. Procédé selon la revendication 1,
**caractérisé en ce qu'**
il comprend en outre l'étape suivante :
- imprégnation de la couche de coeur au moins en partie avec une résine thermodurcissable.

5. Procédé selon la revendication 1,
**caractérisé en ce que**
l'étape de durcissement comprend les étapes suivantes :
- insertion des couches non empilées entre les plaques d'une presse de thermofixation,
- application d'une pression prédéterminée aux couches empilées dans la presse de thermofixation en appliquant une température prédéterminée aux couches empilées dans la presse de thermofixation, et
- maintient des couches empilées dans la presse de thermofixation chauffée, pressées, avec réglage de la température pendant une période de temps suffisante pour former une structure laminée avec les couches.

6. Procédé selon la revendication 5,
**caractérisé en ce que**
la température prédéterminée varie entre 110°C et 170°C et les plages de pression prédéterminées vont de 3,45 MPa (500 psi) jusqu'à 11,03 MPa (1600 psi).

7. Procédé selon la revendication 1,
**caractérisé en ce que**
l'étape de durcissement comprend les étapes suivantes :
- réglage d'une température d'une presse de thermofixation continue sur une température prédéterminée,
- réglage d'une pression de la presse de thermofixation continue à une pression prédéterminée,
- mise en place de la couche décorative et de la couche de coeur dans la presse de thermofixation continue, les couches étant introduites dans la presse à partir d'un emplacement en amont de la presse, et
- maintient des couches superposées dans la presse de thermofixation chauffée, mise en pression, continue pendant une période de temps suffisante pour former une structure laminée avec ces couches.

8. Procédé selon la revendication 7,
**caractérisé en ce que**
la température prédéterminée dépasse 120°C et la pression prédéterminée est comprise entre 2,07 MPa (300 psi) jusqu'à 6,89 MPa (1000 psi).

9. Procédé selon la revendication 7,
**caractérisé en ce qu'**
au moins une partie de la couche décorative et de la couche de noyau comporte des feuilles multiples et ces feuilles multiples sont introduites dans la presse de thermofixation continue à partir d'un voile continu situé en amont de la presse.

10. Stratifié décoratif renforcé par des fibres comprenant :
- une couche décorative ayant une ou plusieurs feuilles de matière cellulosique comme feuille décorative imprégnée avec une résine thermodurcissable partiellement durcie, et
- une couche de coeur comportant un ensemble de feuilles non cellulosiques, renforcées par des fibres, imprégnées au moins partiellement d'une résine de thermofixation et le durcissement est partiel, stratifié **caractérisé en ce que**
la couche décorative comporte en outre au moins une feuille de matière cellulosique comme feuille barrière et elle rejoint la couche de coeur, au moins une barrière n'étant pas imprégnée de résine.

11. Stratifié selon la revendication 10,
**caractérisé en ce que**
la couche décorative comporte une ou plusieurs feuilles décoratives dont au moins l'une est pigmentée dans l'épaisseur.

12. Stratifié selon la revendication 10,
**caractérisé en ce que**
la feuille décorative contient une ou plusieurs feuilles décoratives dont au moins l'une a une impression sur une face.

13. Stratifié selon la revendication 10,
**caractérisé en ce que**
la couche décorative comporte en outre une couche de revêtement formée d'une ou plusieurs feuilles de cellulose alpha.

14. Stratifié selon la revendication 10,
**caractérisé en ce que**
la couche décorative comporte en outre un revêtement du dessus contenant des particules abrasives.

15. Stratifié selon la revendication 10,
**caractérisé en ce que**
la couche de coeur comporte au moins l'une des feuilles formée de fibres de verre, une feuille de matière non tissée de fibres de verre, une feuille de fibres de verre, hachées ou une combinaison de ces matières.

16. Stratifié selon la revendication 10,
**caractérisé en ce que**
la couche de coeur comporte au moins des fibres choisies dans le groupe comprenant la fibre de verre, la fibre de graphite, une fibre aramide, une fibre de bore, ou une fibre à module d'élasticité élevé.
